# EUROPÄISCHE PATENTSCHRIFT

(11) **EP 1 482 613 B1**
(45) Veröffentlichungstag und Bekanntmachung des Hinweises auf die Patenterteilung: **13.08.2008**
(21) Anmeldenummer: 04010736.9
(22) Anmeldetag: 06.05.2004
(51) Int. Cl.: H02G 3/04

(54) **Leitungsführungskanal**
Cable ducting
conduite de câbles

(30) Priorität: 13.05.2003 DE 20307765 U; 05.11.2003 DE 20317387 U
(43) Veröffentlichungstag der Anmeldung: 01.12.2004
(73) Patentinhaber: OBO Bettermann GmbH & Co. KG, 58710 Menden (DE)
(72) Erfinder: Döbbeler, Peter, 57399 Kirchhundem (DE); Raschke Jörg, D-51674 Wiehl (DE)
(74) Vertreter: Patentanwälte Ruff, Wilhelm, Beier, Dauster & Partner

(56) Entgegenhaltungen:
- DE-A1- 2 347 501
- DE-A1- 2 352 913
- DE-U1- 7 721 965
- GB-A- 2 161 330
- US-A- 5 125 199

## Beschreibung

Die Erfindung betrifft einen Leitungsführungskanal mit einem Oberteil und einem Unterteil, wobei das Oberteil oder das Unterteil mit einem sich an eine Längskante anschließenden Haltestreifen versehen ist, der wenigstens abschnittsweise in einer am Unterteil bzw. Oberteil gebildeten Tasche mit einem in Längsrichtung verlaufenden Taschengrund angeordnet ist, wobei die Tasche den in ihr angeordneten Haltestreifen mit zwei Taschenschenkeln umgreift und die Taschenschenkel und der Haltestreifen wenigstens abschnittsweise aneinander anliegen.

Gattungsgemäße Leitungsführungskanäle werden beispielsweise aus Stahlblech hergestellt und das Kanalunterteil und das Kanaloberteil werden durch eine sogenannte Umbördelung, bestehend aus dem Haltestreifen und der Tasche, zusammengehalten. Solche Leitungsführungskanäle werden mit zusammengebautem Oberteil und Unterteil ausgeliefert und weisen beispielsweise Montageöffnungen im Oberteil auf. Fällt ein solcher Leitungsführungskanal während des Transports oder während sonstiger Handhabung zu Boden, so kann sich das Oberteil vom Unterteil lösen, wenn durch den Aufprall der Haltestreifen aus der Tasche herausbewegt wird. Um Leitungsführungskanäle zur Handhabung sicher zu gestalten, darf daher eine gewisse Eigensteifigkeit von Oberteil und Unterteil nicht unterschritten werden.

Mit der Erfindung soll ein einfach herzustellender Leitungsführungskanal mit sicherer Verbindung von Oberteil und Unterteil geschaffen werden.

Erfindungsgemäß ist hierzu ein Leitungsführungskanal mit einem Oberteil und einem Unterteil vorgesehen, wobei das Oberteil oder das Unterteil mit einem sich an eine Längskante anschließenden Haltestreifen versehen ist, der wenigstens abschnittsweise in einer am Unterteil bzw. Oberteil gebildeten Tasche mit einem in Längsrichtung verlaufenden Taschengrund angeordnet ist, wobei die Tasche den in ihr angeordneten Haltestreifen mit zwei Taschenschenkeln umgreift und die Taschenschenkel und der Haltestreifen wenigstens abschnittsweise aneinander anliegen, bei dem wenigstens einer der Taschenschenkel und der Haltestreifen formschlüssig aneinander fixiert sind.

Eine formschlüssige Fixierung ermöglicht es, den zuverlässigen Halt des Haltestreifens in der Tasche sicherzustellen, ohne das zusätzliche Befestigungsmittel, wie Schrauben oder Nieten, oder Klebstoffe eingesetzt werden müssen.

In Weiterbildung der Erfindung sind in wenigstens einen der Taschenschenkel mehrere, von einer dem Haltestreifen abgewandten Oberfläche ausgehende körnerschlagartige Vertiefungen eingebracht, um den Haltestreifen und den wenigstens einen Taschenschenkel relativ zueinander zu fixieren.

Durch Einbringen von körnerschlagartigen Vertiefungen wird auf einfache Weise eine zuverlässige Fixierung des Haltestreifens in der Tasche erreicht. Infolgedessen kann auch bei rauer Handhabung des Leitungsführungskanals sichergestellt werden, dass sich Oberteil und Unterteil nicht voneinander lösen. Das erfindungsgemäße Einbringen von körnerschlagartigen Vertiefungen ist dabei in besonders einfacher Weise ausführbar, indem beispielsweise mittels zweier Walzen, die die Tasche zwischen sich aufnehmen und von denen wenigstens eine mit körnerartigen Spitzen versehen ist, in einem kontinuierlichen Fertigungsprozess eingebracht werden. Das Einbringen der körnerschlagartigen Vertiefungen kann somit in einem kontinuierlichen Fertigungsprozess eine der letzten Fertigungsstufen auf einer Rollenbiegemaschine darstellen.

In Weiterbildung der Erfindung liegt die Oberfläche des Taschenschenkels, von der die körnerschlagartigen Vertiefungen ausgehen, auf einer dem Oberteil abgewandten Unterseite des Unterteils.

Auf diese Weise wird eine sichere Fixierung von Oberteil und Unterteil erreicht und dennoch wird von der Oberseite des Leitungsführungskanal aus gesehen ein ästhetischer Eindruck des Leitungsführungskanals erzielt.

In Weiterbildung der Erfindung sind mehrere körnerschlagartige Vertiefungen parallel zu einer Längsrichtung des Leitungsführungskanals gesehen in regelmäßigem Abstand zueinander angeordnet.

Durch die Maßnahmen wird zum einen eine sichere Fixierung erreicht und zum anderen lassen sich die solchermaßen angeordneten körnerschlagartigen Vertiefungen in einfacher Weise mittels Rollen einbringen, die beispielsweise körnerartige Spitzen aufweisen und die Tasche des Leitungsführungskanal zwischen sich aufnehmen.

In Weiterbildung der Erfindung ist mittels der körnerschlagartigen Vertiefung eine gemeinsame Verformung beider Taschenschenkel und des Haltestreifens bewirkt.

Wenn somit erfindungsgemäß die körnerschlagartige Vertiefung so tief bemessen ist, dass nicht durch der Taschenschenkel, an dem der Körner zunächst ansetzt, sondern auch der zwischen den Taschenschenkeln angeordnete Haltestreifen und der gegenüberliegende Taschenschenkel verformt sind, wird eine besonders belastbare Fixierung des Haltestreifens in der Tasche geschaffen.

In Weiterbildung der Erfindung weisen der in der Tasche angeordnete Haltestreifen und die an dem Haltestreifen anliegenden Taschenschenkel jeweils wenigstens zwei in einem Winkel zueinander angeordnete Abschnitte auf.

Durch eine solche Verschränkung des Haltestreifens und der Tasche wird eine zuverlässige Fixierung des Haltestreifens in der Tasche erreicht. Infolgedessen kann auch bei rauer Handhabung des Leitungsführungskanals sichergestellt werden, dass sich Oberteil und Unterteil nicht voneinander lösen. Die erfindungsgemäße Verschränkung von Oberteil und Unterteil ist dabei einfach herstellbar, da die in einem Winkel zueinander angeordneten Abschnitte des Haltestreifens und der Taschenschenkel beispielsweise nach dem Zusammenbau von Oberteil und Unterteil eingebracht werden können. Wenn die Taschenschenkel und/oder der Haltestreifen in gewissem Maß federnd ausgebildet sind, ist aber auch eine nachträgliche Montage möglich. Beispielsweise kann ein erfindungsgemäßer Leitungsführungskanal einschließlich der Ausformung der im Winkel zueinander angeordneten Abschnitte des Haltestreifens und der Taschenschenkel auf einer Rollenbiegemaschine in einem kontinuierlichen Fertigungsprozess ausgeformt werden.

In Weiterbildung der Erfindung sind die zwei in einem Winkel zueinander angeordneten Abschnitte des Haltestreifens und der Taschenschenkel um eine in Längsrichtung verlaufende Biegeachse abgewinkelt.

Neben einem zuverlässigen Halt des Haltestreifens in der Tasche wird dadurch eine besonders einfache Herstellbarkeit erreicht. Zum Ausformen der in einem Winkel zueinander angeordneten Abschnitte von Haltestreifen und Taschenschenkeln können beispielsweise speziell geformte Rollen einer Rollenbiegemaschine verwendet werden, mit der der Leitungsführungskanal hergestellt wird.

In Weiterbildung der Erfindung sind der Haltestreifen und die Taschenschenkel in Längsrichtung gesehen V-artig gebogen.

Auch durch eine solche Ausformung wird ein zuverlässiger Halt bei einfacher Herstellbarkeit erreicht.

In Weiterbildung der Erfindung liegt der Winkel zwischen 50 Grad und 90 Grad und speziell im Bereich von 20 Grad.

Insbesondere bei einem Winkel im Bereich von 20 Grad zwischen den beiden Abschnitten des Haltestreifens und der Taschenschenkel wird eine sichere und dennoch einfach herstellbare Befestigung erreicht und gegebenenfalls ist die Verbindung zwischen Oberteil und Unterteil aufgrund federnder Materialeigenschaften noch lösbar.

In Weiterbildung der Erfindung ist der Haltestreifen ausgehend von einer Seitenwand des Oberteils oder Unterteils abgewinkelt, wobei ein sich an die Seitenwand anschließender erster Abschnitt des Haltestreifens in Längsrichtung gesehen zu der Seitenwand einen Winkel von weniger als 90 Grad einnimmt und ein sich insbesondere an den ersten Abschnitt anschließender zweiter Abschnitt des Haltestreifens zu der Seitenwand einen Winkel von mehr als 90 Grad einnimmt.

Auf diese Weise wird die Seitenwand mittels des Haltestreifens sicher an der Tasche fixiert.

In Weiterbildung der Erfindung ist die Tasche ausgehend von einer im wesentlichen senkrecht zur Seitenwand angeordneten Bodenwand des Unterteils oder Oberteils gebildet und ein sich an die Bodenwand anschließender erster Abschnitt eines ersten Taschenschenkels nimmt zur Seitenwand einen Winkel von weniger als 90 Grad ein.

Auf diese Weise kann trotz der Verschränkung von Oberteil und Unterteil im Bereich der Tasche und des Haltestreifens erreicht werden, dass die Bodenwand eine untere oder obere Begrenzung des Leitungsführungskanals bildet und beispielsweise auf eine plane Bodenoberfläche aufgelegt werden oder diese bilden kann.

In Weiterbildung der Erfindung sind Oberteil und Unterteil als Blechbiegeteil ausgebildet.

Als Blechbiegeteil sind Oberteil und Unterteil kostengünstig, beispielsweise auf Rollenmaschinen herstellbar und auch bei geringen Materialstärken wird eine hohe Festigkeit des Leitungsführungskanals erreicht. Durch die erfindungsgemäßen körnerschlagartigen Vertiefungen oder die erfindungsgemäße Verschränkung von Oberteil und Unterteil im Bereich des Haltestreifens und der Tasche und die dadurch bewirkte sichere Fixierung von Oberteil und Unterteil können deutlich verringerte Materialstärken eingesetzt werden, ohne dass ein Aufspringen der Verbindung von Oberteil und Unterteil bei rauer Handhabung zu befürchten ist.

Weitere Merkmale und Vorteile der Erfindung ergeben sich aus den Ansprüchen und der folgenden Beschreibung bevorzugter Ausführungsformen der Erfindung im Zusammenhang mit der Zeichnung. In der Zeichnung zeigen:
- Fig. 1: eine abschnittsweise Schnittansicht eines erfindungsgemäßen Leitungsführungskanals gemäß einer ersten Ausführungsform,
- Fig. 2: eine abschnittsweise Vorderansicht eines erfindungsgemäßen Leitungsführungskanals gemäß einer zweiten Ausführungsform und
- Fig. 3: eine ausschnittweise Vergrößerung des Leitungsführungskanals der Fig. 2.

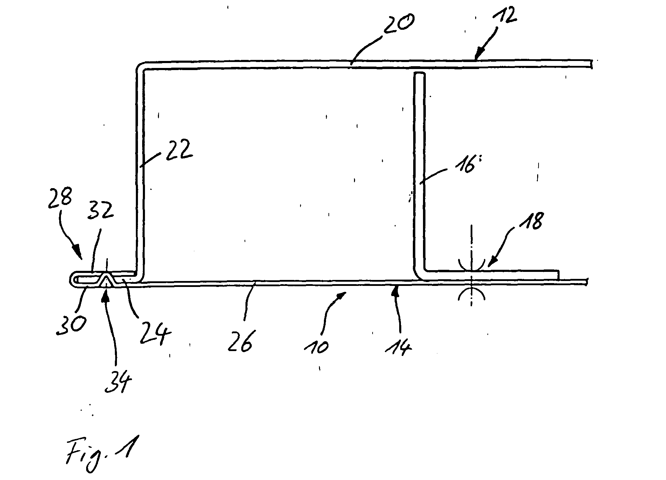

In der Darstellung der Figur 1 ist eine linke Hälfte eines erfindungsgemäßen Leitungsführungskanals 10 dargestellt, wobei eine Schnittansicht, senkrecht zu einer Längsachse des Leitungsführungskanals, gewählt wurde. Der Leitungsführungskanal besteht aus einem Oberteil 12 und einem Unterteil 14 sowie einer am Unterteil 14 befestigten Trennwand 16. Die Trennwand 16 ist L-förmig ausgebildet und liegt mit einem ihrer Schenkel flächig auf einer Bodenwand des Unterteils 14 an. Die Trennwand 16 und das Unterteil 14 sind mittels mehrerer Punktschweißungen 18 miteinander verbunden. Ein zweiter Schenkel der Trennwand 16 ist im rechten Winkel zur Bodenwand des Unterteils 14 angeordnet und erstreckt sich in einen Innenraum des Leitungsführungskanals, der vom Unterteil 14 und vom Oberteil 12 umschlossen wird.

Das Oberteil 12 weist einen U-artigen Querschnitt mit einem Deckel 20 und zwei Seitenwänden 22 auf, wobei in der Darstellung der einzigen Figur lediglich eine Seitenwand 22 dargestellt ist. Ausgehend von der Seitenwand 22 ist ein Haltestreifen 24 etwa rechtwinklig und vom Innenraum des Leitungsführungskanals 10 abgebogen.

Das Unterteil 14 weist eine ebene Bodenwand 26 auf, die im zusammengebauten Zustand des Leitungsführungskanals 10 senkrecht zu den Seitenwänden 22 angeordnet ist. Eine Längskante der Bodenwand 14 wird durch eine Tasche 28 gebildet, die einen in Längsrichtung verlaufenden Taschengrund aufweist. In diese Tasche 28 ist der Haltestreifen 24 des Oberteils 12 eingeschoben. Ein in der Darstellung der einzigen Figur unterer Taschenschenkel 30 liegt dabei flächig an einer Unterseite des Haltestreifens 24 an und ein in der einzigen Figur oberer Taschenschenkel 32 liegt flächig an einer Oberseite des Haltestreifens 24 an. Um den Haltestreifen 24 sicher in der Tasche 28 zu fixieren, ist in den unteren Taschenschenkel 30 eine körnerschlagartige Vertiefung 34 eingebracht. Die körnerschlagartige Vertiefung 34 geht dabei von einer Oberfläche des unteren Taschenschenkels 30 aus, die dem Haltestreifen 24 abgewandt ist. Die körnerschlagartige Vertiefung 34 erstreckt sich so weit in Richtung auf den Haltestreifen 24 und durch diesen hindurch, dass auch der obere Taschenschenkel 34 noch mitverformt wird. Dabei ist festzustellen, dass die Darstellung der körnerschlagartigen Vertiefung 34 in der Figur lediglich schematisch ist und verdeutlichen soll, dass sich die körnerschlagartige Vertiefung vollständig durch die Materialdicke des Haltestreifens 24 hindurch erstreckt. Durch die sich dadurch ergebende Materialverdrängung wird auch noch der obere Taschenschenkel 32 mitverformt. Es ist dabei vorgesehen, weder den unteren Taschenschenkel 30, den Haltestreifen 24 noch den oberen Taschenschenkel 32 an der für die körnerschlagartige Vertiefung 34 vorgesehenen Stelle vorzubohren, vielmehr soll durch die körnerschlagartige Vertiefung 34 eine plastische Materialverformung erfolgen, mittels der dann der Haltestreifen 34 sicher in der Tasche 28 gehalten ist.

Eine fertigungstechnisch zwar aufwendigere aber ebenfalls zuverlässige Fixierung des Haltestreifens ließe sich aber auch dadurch erreichen, dass der Haltestreifen 34 eine Bohrung oder eine Ausnehmung aufweist, in die hinein sich die körnerschlagartige Vertiefung 34 dann ausdehnen kann. Dies kann beispielsweise vorteilhaft sein, wenn das Oberteil 20 aus besonders zähem, schlecht verformbarem Material oder beispielsweise aus Kunststoff besteht.

In Figur 1 ist lediglich eine einzige körnerschlagartige Vertiefung 34 dargestellt. Tatsächlich werden mehrere körnerschlagartige Vertiefungen 34 parallel zur Längsachse des Leitungsführungskanals 10 hintereinander in den unteren Taschenschenkel 30 eingebracht. Dabei wird ein vergleichsweise geringer Abstand, beispielsweise zwischen 10mm und 18mm gewählt, um den Haltestreifen 24 in der Tasche 28 zu sichern. Dieser Abstand der Körnerschläge oder körnerschlagartigen Vertiefungen 34 in Längsrichtung ist von der übrigen Gestaltung des Leitungsführungskanals 10 sowie von dem gewählten Material abhängig.

Die körnerschlagartigen Vertiefungen 34 werden mittels einer Walze eingebracht, die an ihrem Umfang mehrere, gleichmäßig voneinander beabstandete Körner aufweist. Die Fläche der gegenüberliegenden Walze, auf der der obere Taschenschenkel 32 aufliegt, ist dabei eben, so dass der Leitungsführungskanal 10 im Bereich des oberen Taschenschenkels 32 nahezu eben bleibt. Es sind lediglich schwache Abdrücke am oberen Taschenschenkel 32 in den Bereichen zu erkennen, in denen durch das Einbringen der körnerschlagartigen Vertiefung 34 Material verdrängt wurde. Die beiden Walzen zum Einbringen der körnerschlagartigen Vertiefungen 34 können als letzte Walzen einer Profiliereinheit angeordnet sein.

Bei dem erfindungsgemäßen Leitungsführungskanal 10 ist der Haltestreifen 24 somit verlässlich gegen ein Herausrutschen aus der Tasche 28 in Richtung auf den Innenraum des Leitungsführungskanals 10 zu gesichert. Es ist auch zu erkennen, dass eine in der Figur unten liegende Oberfläche der Bodenwand 26, die die untere Begrenzung des Leitungsführungskanals 10 darstellt, eben ist, so dass der Leitungsführungskanal 10 mit der Bodenwand 26 flächig auf einem ebenen Untergrund aufliegen kann.

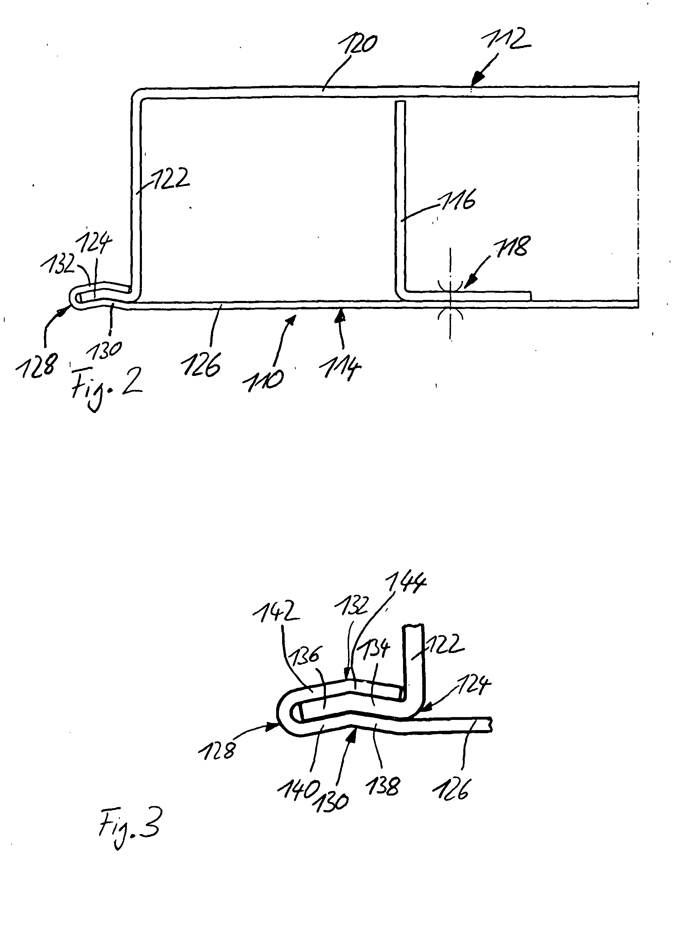

In der Darstellung der Fig. 2 ist eine linke Hälfte eines erfindungsgemäßen Leitungsführungskanals 110 dargestellt, wobei eine Vorderansicht, entlang einer Längsachse des Leitungsführungskanals gesehen, gewählt wurde. Der Leitungsführungskanal besteht aus einem Oberteil 112 und einem Unterteil 114 sowie einer am Unterteil 114 befestigten Trennwand 116. Die Trennwand 116 ist L-förmig ausgebildet und liegt mit einem ihrer Schenkel flächig auf einer Bodenwand des Unterteils 114 an. Die Trennwand 116 und das Unterteil 114 sind mittels mehrerer Punktschweißungen 118 miteinander verbunden. Ein zweiter Schenkel der Trennwand 116 ist im rechten Winkel zur Bodenwand des Unterteils 114 angeordnet und erstreckt sich in einen Innenraum des Leitungsführungskanals, der vom Unterteil 114 und vom Oberteil 112 umschlossen wird.

Das Oberteil 112 weist einen U-artigen Querschnitt auf mit einem Deckel 120 und zwei Seitenwänden 122 auf, wobei in der Darstellung der Fig. 2 lediglich eine Seitenwand 122 dargestellt ist. Ausgehend von der Seitenwand 122 ist ein Haltestreifen 124 etwa rechtwinklig und vom Innenraum des Leitungsführungskanals 110 abgebogen.

Das Unterteil 114 weist eine ebene Bodenwand 126 auf, die im zusammengebauten Zustand des Leitungsführungskanals 110 senkrecht zu den Seitenwänden 122 angeordnet ist. Eine Längskante der Bodenwand 114 wird durch eine Tasche 128 gebildet, die einen in Längsrichtung verlaufenden Taschengrund aufweist. In diese Tasche 128 ist der Haltestreifen 124 des Oberteils 112 eingeschoben. Ein in der Darstellung der Fig. 1 unterer Taschenschenkel 130 liegt dabei flächig an einer Unterseite des Haltestreifens 124 an und ein in der Fig. 1 oberer Taschenschenkel 132 liegt flächig an einer Oberseite des Haltestreifens 124 an. Um den Haltestreifen 124 sicher in der Tasche 128 zu fixieren, sind der Haltestreifen 124 und die Taschenschenkel 130, 132 miteinander verschränkt und weisen jeweils eine in Längsrichtung gesehen V-artige Form auf. Durch diese Verschränkung von Oberteil 112 und Unterteil 114 ist der Haltestreifen 124 gegen ein Herausrutschen aus der Tasche 128 in Richtung auf den Innenraum des Leitungsführungskanals 110 zu gesichert.

Da der Haltestreifen 124 und die Taschenschenkel 130, 132 jeweils um eine in Längsrichtung verlaufende Biegeachse zu ihrer V-artigen Form gebogen sind, lässt sich die Verschränkung von Oberteil 112 und Unterteil 114 während des Herstellungsprozesses des Leitungsführungskanals 110 auf einer Rollenbiegemaschine herstellen. Dadurch wird die Herstellung des Leitungsführungskanals 110 gegenüber konventionellen Leitungsführungskanälen ohne Verschränkung von Oberteil 112 und Unterteil 114 nicht erschwert, durch den verbesserten Halt des Haltestreifens 124 in der Tasche 128 kann aber die Materialstärke von Oberteil 112 und/oder Unterteil 114 deutlich reduziert werden, ohne dass bei rauer Handhabung ein Herausrutschen des Haltestreifens 124 aus der Tasche 128 zu befürchten ist.

Die vergrößerte, ausschnittsweise Darstellung der Fig. 3 zeigt die Ausbildung des Haltestreifens 124 und seine Anordnung in der Tasche 128. Ausgehend von der Seitenwand 122 ist ein erster Abschnitt 134 des Haltestreifens 124 um eine in Längsrichtung verlaufende Biegeachse vom Innenraum des Leitungsführungskanals 110 weggebogen. Der erste Abschnitt 134 des Haltestreifens 124 nimmt zu der Seitenwand 122 einen Winkel von etwa 80 Grad ein.

An den ersten Abschnitt 134 schließt sich ein zweiter Abschnitt 136 an, der gegenüber dem ersten Abschnitt 134 um einen Winkel von etwa 20 Grad um eine in Längsrichtung verlaufende Biegeachse abgebogen ist. Zu der Seitenwand 122 nimmt der zweite Abschnitt 136 einen Winkel von etwa 100 Grad ein. Der Haltestreifen 124 erhält durch die Abschnitte 134 und 136 die bereits in Fig. 1 erkennbare V-artige Form.

Ausgehend von der Bodenwand 126 ist ein erster Abschnitt 138 des ersten Taschenschenkels 130 zum Innenraum des Leitungsführungskanals 110 hin abgebogen, so dass der erste Abschnitt 138 des ersten Taschenschenkels 130 zur Seitenwand 123 einen Winkel von etwa 80 Grad einnimmt. Wie zu erkennen ist, liegt der erste Abschnitt 138 des ersten Taschenschenkels 130 flächig an dem Abschnitt 134 des Haltestreifens 124 an.

An den ersten Abschnitt 138 schließt sich ein zweiter Abschnitt 140 des ersten Taschenschenkels 130 an, der gegenüber dem ersten Abschnitt 138 um eine in Längsrichtung verlaufende Biegeachse um etwa 20 Grad, vom Innenraum des Leitungsführungskanals 110 weg, abgebogen ist. Der zweite Abschnitt 140 nimmt dadurch zu der Seitenwand einen Winkel von etwa 100 Grad ein.

An den zweiten Abschnitt 140 des ersten Taschenschenkels 130 schließt sich der Taschengrund an. Der Taschengrund verbindet den zweiten Abschnitt 140 des unteren Taschenschenkels 130 mit einem zweiten Abschnitt 142 des zweiten Taschenschenkels 132. Der zweite Abschnitt 142 des zweiten Taschenschenkels 132 ist parallel zum zweiten Abschnitt 140 des ersten Taschenschenkels 130 angeordnet.

An den zweiten Abschnitt 142 schließt sich ein erster Abschnitt 144 des oberen Taschenschenkels 132 an, der parallel zum ersten Abschnitt 138 des unteren Taschenschenkels 130 angeordnet ist.

Wie bereits ausgeführt wurde, liegen der untere Taschenschenkel 130, der Haltestreifen 124 und der obere Taschenschenkel 132 im Bereich ihrer Abschnitte 134, 136, 138, 140, 142 und 144 flächig aneinander an. Wie der Fig. 3 zu entnehmen ist, ist der Haltestreifen 124 dadurch gegen ein Herausrutschen aus der Tasche 128 in Richtung auf den Innenraum des Leitungsführungskanals 110 zu gesichert. Weiterhin ist zu erkennen, dass eine in der Fig. 2 unten liegende Oberfläche der Bodenwand 126 die untere Begrenzung des Leitungsführungskanals 110 darstellt, so dass die Bodenwand 126 flächig auf einem ebenen Untergrund aufliegen könnte.

Die in den Figuren 1 bis 3 gezeigten Ausführungsformen lassen sich auch dahingehend kombinieren, dass zusätzlich zu einer V-förmigen Verformung von Haltestreifen und Tasche zusätzlich körnerschlagartige Vertiefungen eingebracht sind.

## Patentansprüche

1. Leitungsführungskanal mit einem Oberteil (12; 112) und einem Unterteil (14; 114), wobei das Oberteil (12; 112) oder das Unterteil (14; 114) mit einem sich an eine Längskante anschließenden Haltestreifen (24; 124) versehen ist, der wenigstens abschnittsweise in einer am Unterteil (14; 114) beziehungsweise Oberteil (12; 112) gebildeten Tasche (28; 128) mit einem in Längsrichtung verlaufenden Taschengrund angeordnet ist, wobei die Tasche (28; 128) den in ihr angeordneten Haltestreifen (24; 124) mit zwei Taschenschenkeln (30, 32; 130, 132) umgreift und die Taschenschenkel (30, 32; 130, 132) und der Haltestreifen (24; 124) wenigstens abschnittsweise aneinander anliegen, wobei wenigstens einer der Taschenschenkel (30, 32; 130, 132) und der Haltestreifen (24; 124) formschlüssig aneinander fixiert sind, wobei in wenigstens einen der Taschenschenkel (30, 32) mehrere, von einer dem Haltestreifen (24) abgewandten Oberfläche ausgehende körnerschlagartige Vertiefungen (34) eingebracht sind, um den Haltestreifen (24) und den wenigstens einen Taschenschenkel (30, 32) relativ zueinander zu fixieren, **dadurch gekennzeichnet, dass** der Leitungsführungskanal mittels einer Rollenbiegemaschine in einem kontinuierlichen Prozess hergestellt ist und dass die körnerschlagartigen Vertiefungen mittels zweier, den wenigstens einen Taschenschenkel zwischen sich aufnehmenden Walzen der Rollenbiegemaschine in den Taschenschenkel eingebracht sind, wobei wenigstens eine der Walzen körnerartige Spitzen aufweist.

2. Leitungsführungskanal nach Anspruch 1, **dadurch gekennzeichnet, dass** die Oberfläche des Taschenschenkels (30, 32), von der die körnerschlagartigen Vertiefungen (34) ausgehen, auf einer' dem Oberteil (12) abgewandten Unterseite des Unterteils (14) liegt.

3. Leitungsführungskanal nach wenigstens einem der vorstehenden Ansprüche, **dadurch gekennzeichnet, dass** mehrere körnerschlagartige Vertiefungen (34) parallel zu einer Längsrichtung des Leitungsführungskanals gesehen in regelmäßigem Abstand zueinander angeordnet sind.

4. Leitungsführungskanal nach wenigstens einem der vorstehenden Ansprüche, **dadurch gekennzeichnet, dass** mittels der körnerschlagartigen Vertiefung (34) eine gemeinsame Verformung beider Taschenschenkel (30, 32) und des Haltestreifens (24) bewirkt ist.

5. Leitungsführungskanal nach wenigstens einem der vorstehenden Ansprüche, **dadurch gekennzeichnet, dass** Oberteil (12; 112) und Unterteil (14; 114) als Blechbiegeteil ausgebildet sind.

6. Leitungsführungskanal nach wenigstens einem der vorstehenden Ansprüche, **dadurch gekennzeichnet, dass** der in der Tasche (128) angeordnete Haltestreifen (124) und die an dem Haltestreifen (124) anliegenden Taschenschenkel (130, 132) jeweils wenigstens zwei in einem Winkel zueinander angeordnete Abschnitte (134, 136, 138, 140, 142, 144) aufweisen.

7. Leitungsführungskanal nach Anspruch 6, **dadurch gekennzeichnet, dass** die zwei in einem Winkel zueinander angeordneten Abschnitte (134, 136, 138, 140, 142, 144) des Haltestreifens (124) und der Taschenschenkel (130, 132) jeweils um eine in Längsrichtung verlaufende Biegeachse abgewinkelt sind.

8. Leitungsführungskanal nach Anspruch 7, **dadurch gekennzeichnet, dass** der Haltestreifen (124) und die Taschenschenkel (130, 132) in Längsrichtung gesehen V-artig gebogen sind.

9. Leitungsführungskanal nach wenigstens einem der vorstehenden Ansprüche 6 bis 7, **dadurch gekennzeichnet, dass** der Winkel zwischen 15 Grad und 90 Grad, insbesondere im Bereich von 20 Grad liegt.

10. Leitungsführungskanal nach wenigstens einem der vorstehenden Ansprüche, **dadurch gekennzeichnet, dass** der Haltestreifen (124) ausgehend von einer Seitenwand (122) des Oberteils (112) oder Unterteils (14; 114) abgewinkelt ist, wobei ein sich an die Seitenwand (122) anschließender erster Abschnitt (134) des Haltestreifens (124) in Längsrichtung gesehen zu der Seitenwand (122) einen Winkel von weniger als 90 Grad einnimmt und ein sich insbesondere an den ersten Abschnitt (134) anschließender zweiter Abschnitt (136) des Haltestreifens (124) zu der Seitenwand (122) einen Winkel von mehr als 90 Grad einnimmt.

11. Leitungsführungskanal nach Anspruch 10, **dadurch gekennzeichnet, dass** die Tasche (128) ausgehend von einer im wesentlichen senkrecht zur Seitenwand (122) angeordneten Bodenwand (126) des Unterteils (14; 114) oder Oberteils (112) gebildet ist und ein sich an die Bodenwand (126) anschließender erster Abschnitt (138) eines ersten Taschenschenkels (130) zur Seitenwand (122) einen Winkel von weniger als 90 Grad einnimmt.

## Claims

1. Cable ducting with a top part (12; 112) and a bottom part (14; 114), in which the top part (12; 112) or the bottom part (14; 114) is provided with a holding strip (24; 124) attached to a longitudinal edge, which is located at least sectionwise in a pocket (28; 128) formed on the bottom part (14; 114) or top part (12; 112) respectively with a pocket base running in longitudinal direction, in which the pocket (28; 128) encompasses the holding strip (24; 124) inside it with two pocket limbs (30, 32; 130, 132) and the pocket limbs (30, 32; 130, 132) and the holding strip (24; 124) at least section-wise lie on one another, wherein at least one of the pocket limbs (30, 32; 130, 132) and the holding strip (24; 124) are fixed on one another in a form-closed manner, wherein in at least one of the pocket limbs (30, 32) several, punch-shaped depressions (34) are provided starting from a surface facing away from the holding strip (24), in order to fix the holding strip (24) and at least one pocket limb (30, 32) relatively to one another, **characterised in that** the cable ducting is manufactured by means of a roller bending machine in a continuous process and that the punch-shaped depressions are provided by means of two rollers of the roller bending machine accommodating at least one pocket limb between them, wherein at least one of the rollers features punch-shaped points.

2. Cable ducting according to Claim 1, **characterised in that** the surface of the pocket limb (30, 32), from which the punch-shaped depressions (34) originate lies on one of the bottom sides of the bottom parts (14) facing away from the top part (12).

3. Cable ducting according to at least one of the preceding claims **characterised in that** several punch-shaped depressions (34) are arranged at regular intervals relative to one another, parallel to a longitudinal direction of the cable ducting.

4. Cable ducting according to at least one of the preceding claims **characterised in that** common deformation of both pocket limbs (30, 32) and the holding strip (24) is caused by means of the punch-shaped depression (34).

5. Cable ducting according to at least one of the preceding claims **characterised in that** the top part (12; 112) and bottom part (14; 114) are formed as a bent sheet metal part.

6. Cable ducting according to at least one of the preceding claims, **characterised in that** the holding strip (124) located inside the pocket (128) and the pocket limbs (130, 132) lying on the holding strip (124) feature at least two sections (134, 136, 138, 140, 142, 144) positioned at an angle relative to one another.

7. Cable ducting according to Claim 6, **characterised in that** the two sections (134, 136, 138, 140, 142, 144) of the holding strip (124) are positioned at an angle relative to one another and the pocket limbs (130, 132) are angled respectively about a bending axis running in longitudinal direction.

8. Cable ducting according to Claim 7 **characterised in that** the holding strip (124) and the pocket limbs (130, 132) are bent in V-shape, viewed in the longitudinal direction.

9. Cable ducting according to at least one of the preceding claims 6 to 7, **characterised in that** the angle lies between 15 degrees and 90 degrees, particularly in the range of 20 degrees.

10. Cable ducting according to at least one of the preceding claims, **characterised in that** the holding strip (124) is angled starting from a side wall (122) of the top part (112) or bottom part (14; 114), in which a first section (134) of the holding strip (124) adjoining the side wall (122) viewed in longitudinal direction assumes an angle of less than 90 degrees and a second section (136) particularly adjoining the first section (134) of the holding strip (124) assumes an angle greater than 90 degrees relative to the side wall (122).

11. Cable ducting according to Claim 10, **characterised in that** the pocket (128) is formed essentially perpendicularly to the side wall (122), starting from a floor wall (126) of the bottom part (14; 114) or top parts (112) and a first section (138) of a first pocket limb (130) adjoining the floor wall (126) to the side wall (122) assumes an angle of less than 90 degrees.

## Revendications

1. Conduite de câbles comprenant une partie supérieure (12 ; 112) et une partie inférieure (14 ; 114), la partie supérieure (12 ; 112) ou la partie inférieure (14 ; 114) étant dotée d'un ruban de retenue (24 ; 124) raccordé à une arête longitudinale, ruban qui est agencé au moins de façon segmentée dans une poche (28 ; 128) formée contre la partie inférieure (14 ; 114) et/ou supérieure (12 ; 112), avec un fond de poche présentant un tracé longitudinal, la poche (28 ; 128) entourant par deux branches (30, 32 ; 130, 132) le ruban de retenue (24 ; 124) agencé en elle, et les branches (30, 32 ; 130, 132) de poche et le ruban de retenue (24 ; 124) appliquant au moins de façon segmentée les uns contre les autres, au moins l'une des branches (30, 32 ; 130, 132) de poche et le ruban de retenue (24 ; 124) étant immobilisés l'une contre l'autre par adhérence des formes, des creux (34) qui paraissent réalisés à coup de pointeau ayant été ménagés dans au moins l'une des branches (30, 32) de poche et partant d'une surface tournant le dos au ruban de retenue (24), pour immobiliser le ruban de retenue (24) et au moins une branche (30, 32) de poche l'un relativement à l'autre, **caractérisée en ce que** la conduite de câble est fabriquée selon un processus continu par une cintreuse à rouleaux, et **en ce que** les creux paraissant réalisés à coup de pointeau ont été ménagés dans les branches de poche au moyen de deux cylindres de la cintreuse à rouleaux prenant entre eux au moins une branche de poche, au moins l'un des cylindres présentant des pointes en forme de pointeaux.

2. Conduite de câbles selon la revendication 1 **caractérisée en ce que** la surface - de la branche (30, 32) de poche - dont partent les creux (34) paraissant réalisés à coup de pointeau se trouve sur le côté inférieur de la partie inférieure (14), côté qui tourne le dos au côté supérieur (12).

3. Conduite de câbles selon au moins l'une des revendications précédentes, **caractérisée en ce que** plusieurs creux (34) paraissant réalisés à coup de pointeau sont agencés régulièrement espacés les uns des autres lorsque observés parallèlement au sens longitudinal de la conduite de câbles.

4. Conduite de câbles selon au moins l'une des revendications précédentes, **caractérisée en ce que** le creux (34) paraissant réalisé à coup de pointeau provoque une déformation conjointe des deux branches (30, 32) de poche et du ruban de retenue (24).

5. Conduite de câbles selon au moins l'une des revendications précédentes, **caractérisée en ce que** la partie supérieure (12 ; 112) et la partie inférieure (14 ; 114) sont configurées en pièce coudée en tôle.

6. Conduite de câbles selon au moins l'une des revendications précédentes, **caractérisée en ce que** le ruban de retenue (124) agencé dans la poche (128) et les branches (130, 132) de poche appliquant contre le ruban de retenue (124) présentent chacun au moins deux segments (134, 136, 138, 140, 142, 144) agencés l'un par rapport à l'autre de sorte à former un angle.

7. Conduite de câbles selon la revendication 6, **caractérisée en ce que** les deux segments (134, 136, 138, 140, 142, 144) - agencés l'un par rapport à l'autre de sorte à former un angle - du ruban de retenue (124) et de la branche (130, 132) de poche sont coudés chacun selon un axe de flexion présentant un tracé longitudinal.

8. Conduite de câbles selon la revendication 7, **caractérisée en ce que** le ruban de retenue (124) et les branches (130, 132) de poche sont coudés en V lorsque observés dans le sens longitudinal.

9. Conduite de câbles selon l'une des revendications précédentes 6 et 7, **caractérisée en ce que** l'angle est compris entre 15 et 90 degrés, et qu'il se situe en particulier dans la plage des 20 degrés.

10. Conduite de câble selon au moins l'une des revendications précédentes, **caractérisée en ce que** le ruban de retenue (124) est coudé en partant d'une paroi latérale (122) de la partie supérieure (112) ou de la partie inférieure (14 ; 114), un premier segment (134) du ruban de retenue (124) raccordé à la paroi latérale (122) formant, lorsque observé dans le sens longitudinal, un angle de moins de 90 degrés avec la paroi latérale (122), et un deuxième segment (136) raccordé notamment au premier segment (134) du ruban de retenue (124) formant un angle de plus de 90 degrés avec la paroi latérale (122).

11. Conduite de câble selon la revendication 10, **caractérisée en ce que** la poche (128) est formée à partir d'une paroi de fond (126) - de la partie inférieure (14 ; 114) ou de la partie supérieure (112) - agencée essentiellement à la verticale par rapport à la paroi latérale (122), et **en ce qu'**un premier segment (138) - raccordé à la paroi de fond (126) - d'une première branche (130) de poche forme un angle de moins de 90 degrés avec la paroi latérale (122).
